Europäisches Patentamt

European Patent Office

Office européen des brevets

(11) Publication number: **0 196 728 B1**

# EUROPEAN PATENT SPECIFICATION

(45) Date of publication of patent specification: **12.06.91**  (51) Int. Cl.⁵: **A01C 17/00**

(21) Application number: **86200550.1**

(22) Date of filing: **02.04.86**

(54) **Apparatus for spreading spreadable material.**

(30) Priority: **03.04.85 NL 8500978**

(43) Date of publication of application:
**08.10.86 Bulletin 86/41**

(45) Publication of the grant of the patent:
**12.06.91 Bulletin 91/24**

(84) Designated Contracting States:
**DE FR GB NL**

(56) References cited:
**DE-A- 1 457 823**
**FR-A- 2 065 521**
**US-A- 3 185 486**

(73) Proprietor: **C. van der Lely N.V.**
**Weverskade 10 P.O. Box 26**
**NL-3155 ZG Maasland(NL)**

(72) Inventor: **Van der Lely, Cornelis**
**7, Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

## Description

The invention relates to an apparatus for spreading spreadable material, more specifically granular and/or pulverulent material such as fertilizer or seeds, having a frame to which a hopper and at least one spreader member which is movable around an upwardly extending rotary axis are provided, to which the material can be fed during operation from the hopper, the lower end of the hopper having a slotted discharge nozzle below which a reciprocatable dosing apparatus including a shaker member is disposed constituting the bottom of the hopper. An apparatus of this kind is known from the US-A-3 185 486. In this known construction, within the nozzle of the hopper is supported a baffle plate. The material is discharged between the edges of the baffle plate and wall portions of the hopper to a reciprocating pan conveying the material to spreading members.

It is an object of the invention to improve an apparatus of the above-described type by improving the flow of material to the spreading member.

According to the invention, this can be accomplished in that the bottom of the shaker member is provided with discharge apertures and that a dosing slide is provided abutting the bottom of the shaker member and having passages for determining the open size of the discharge apertures through which material can be fed from the hopper to the spreading member. Using such a dosing apparatus the material can be kept in motion such that a constant feed from the hopper to the spreader member is possible irrespectively the size of the open part of the discharge aperture and without the risk of damaging the material. Particularly when the material is granular the granular structure will be preserved. The motion of the shaker member will namely not adversely affect the structure of the material. This enables a uniform distribution of the material over larger widths by means of the spreader members. The dosing apparatus formed as an elongated member makes it possible to collect the material over a large width from the hopper so that the material can be fed from the hopper to the spreader member over a large width.

An advantageous embodiment of the apparatus according to the invention is obtained when the hopper bottom is provided with an elongate slotted discharge nozzle to which the shaker member is contiguous. Thus, the other material present in the hopper will exert little pressure on the material contained in the shaker member. This is advantageous for a proper discharge of the material from the hopper.

In accordance with an advantageous embodiment of the apparatus according to the invention, the dosing apparatus is fastened, capable of movement, to the apparatus by means of suspension members. In this way the movable suspension of the shaker member in the apparatus is obtained such that always an appropriate movement of the shaker member is possible. This particularly prevents, for example, corrosive materials sich as fertilizer from negatively affecting the movable suspension, as would be the case when the dosing apparatus were fitted to the apparatus capable of hinging around hinge pins.

The construction of the apparatus according to the invention can be still further improved when the frame includes a supporting beam extending transversely of the normal direction of travel of the apparatus, to which beam the bottom end of the hopper and a spreader member are disposed, and also a dosing apparatus via which material can be fed during operation of the apparatus from the hopper to the spreader member. Acting thus, several components can be disposed advantageously on one single supporting beam. This provides that the different portions of the apparatus can be disposed in an advantageous and simple way in the proper position relative to each other and be kept there.

In accordance with a further embodiment of the apparatus according to the invention, the supporting beam has a U-shaped cross-section, the two legs of this U extending upwardly and being located on either side of the bottom end of the hopper and supporting this hopper.

In a further embodiment of the apparatus according to the invention, the dosing apparatus is coupled to spreader member drive members. Thus, the drive means for the different components of the apparatus can be of a very simple construction.

In a further embodiment of the apparatus according to the invention, it includes two or more spreader members disposed on a support, which is rigidly connected to the supporting beam of the frame.

According to the invention, the drive of the dosing apparatus can be obtained advantageously when a drive axle for driving the spreader members have one end coupled to the dosing apparatus. According to the invention, an advantageous embodiment is obtained when the drive axle is provided near one end with an oblique drive disc around which a ring is rotatable which is coupled to the shaker member via a drive arm. In accordance with a further embodiment of the apparatus according to the invention it includes two oppositely rotatable spreader members. Using the construction according to the invention, the material can advantageously be fed uniformly to both spreader members for accomplishing a uniform spread.

The invention will now be described in greater detail by way of example with reference to an advantageous embodiment shown in the drawings.

Figure 1 is a front view of the apparatus according to the embodiment.

Figure 2 is a side elevational view of the apparatus of Figure 1, seen in the direction of the arrow II in Figure 1.

Figure 3 shows a horizontal cross-section through a portion of the apparatus seen along the line III-III in Figure 1.

Figure 4 shows a cross-sectional view of the portion shown in Figure 3, seen along the line IV-IV in Figure 3.

Figure 5 shows, partly in cross-section and partly in a side elevational view, the portion of the apparatus shown in the Figures 3 and 4, the cross-section being seen along the line V-V in Figure 3 and the side elevational view in the direction indicated by the arrow V in Figure 1.

Figure 6 shows on an enlarged scale a cross-section of a support, seen along the line VI-VI in Figure 5.

Figure 7 is a plan view of an adjusting member for the dosing slide.

Figure 8 shows schematically a plan view of the apparatus in accordance with the preceding Figures.

Figure 9 is a schematical plan view, corresponding to Figure 8, of a different embodiment of an apparatus according to the invention.

The apparatus shown in the Figures is a spreader apparatus for spreading material during movement of the apparatus over the land.

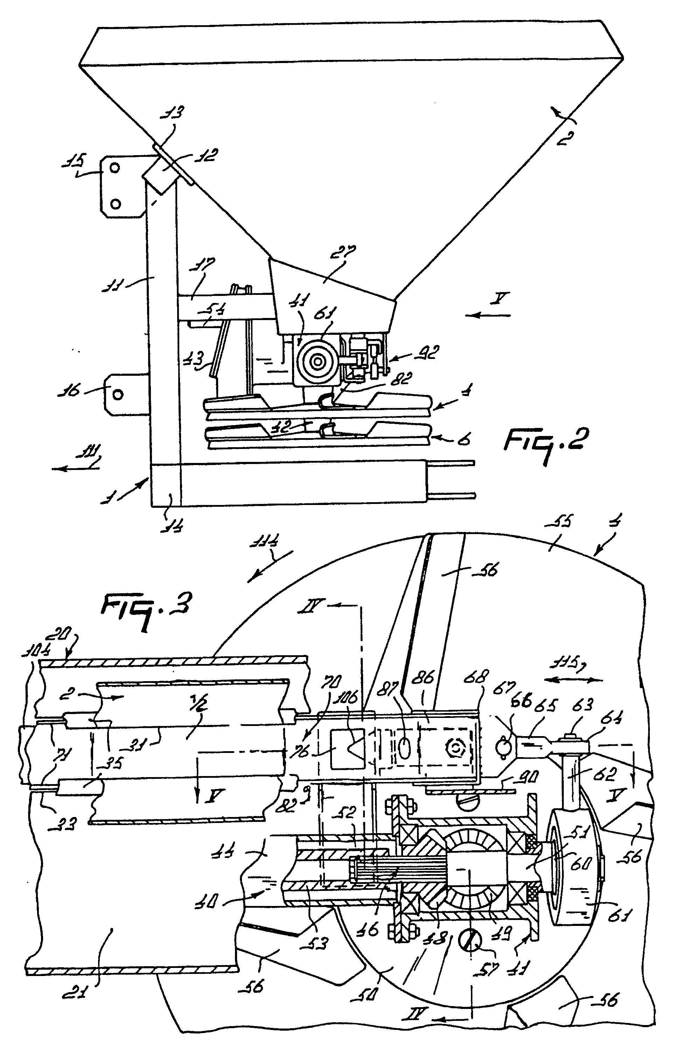

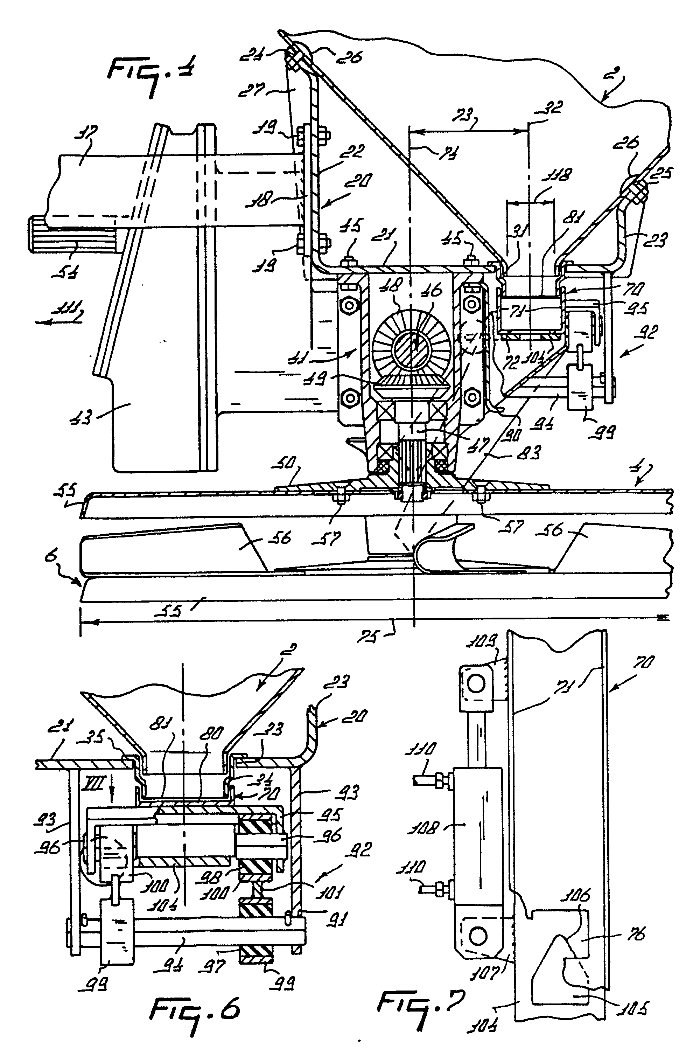

The apparatus shown has a frame 1 to which a hopper 2 and four spreader members 3, 4, 5 and 6, located under the hopper, are fastened. The frame 1 comprises two frame pillars 10 and 11 which, when the apparatus is in the upright position, extend vertically. The upper ends of the pillars 10 and 11 are interconnected by a horizontal frame beam 12 having strips 13 to which the hopper 2 is fitted. The bottom ends of the vertical beam pillars 10 and 11 are interconnected by a basic support 14 which is constituted by one or a plurality of frame beams and - as shown in Figure 2 - extends perpendicularly to the frame pillars 10 and 11. Relative to the normal direction of travel 111 of the apparatus, the basic support 14 extends rearwardly from the pillars 10 and 11. The frame beam 12 includes lugs 15 and the frame pillars 10 and 11 include the lugs 16 by means of which the apparatus is couplable to the top rod or the lift arms, respectively, of the three-point lever lifting device of a tractor or a such like vehicle.

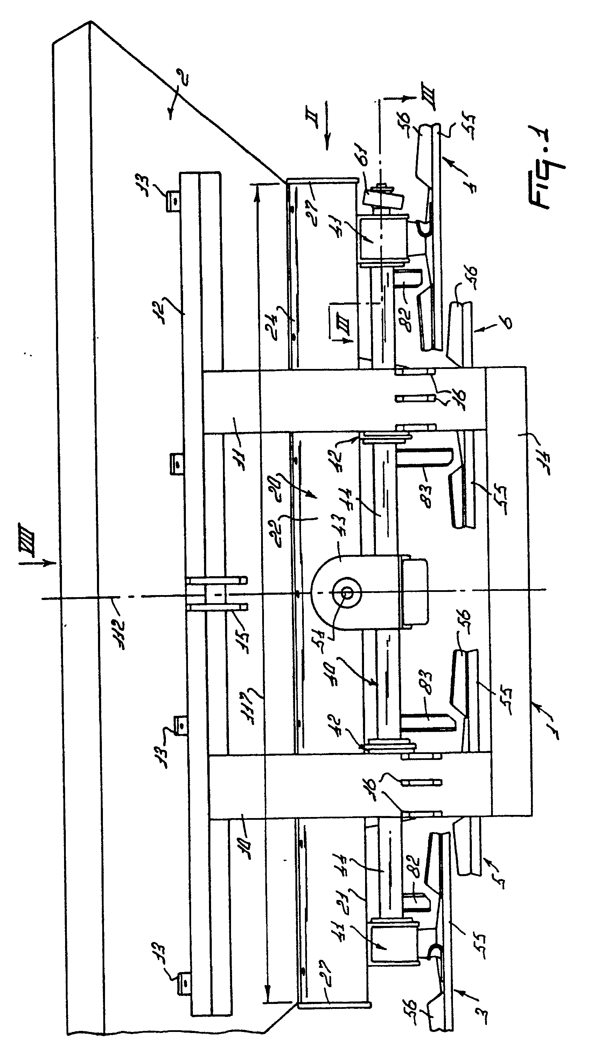

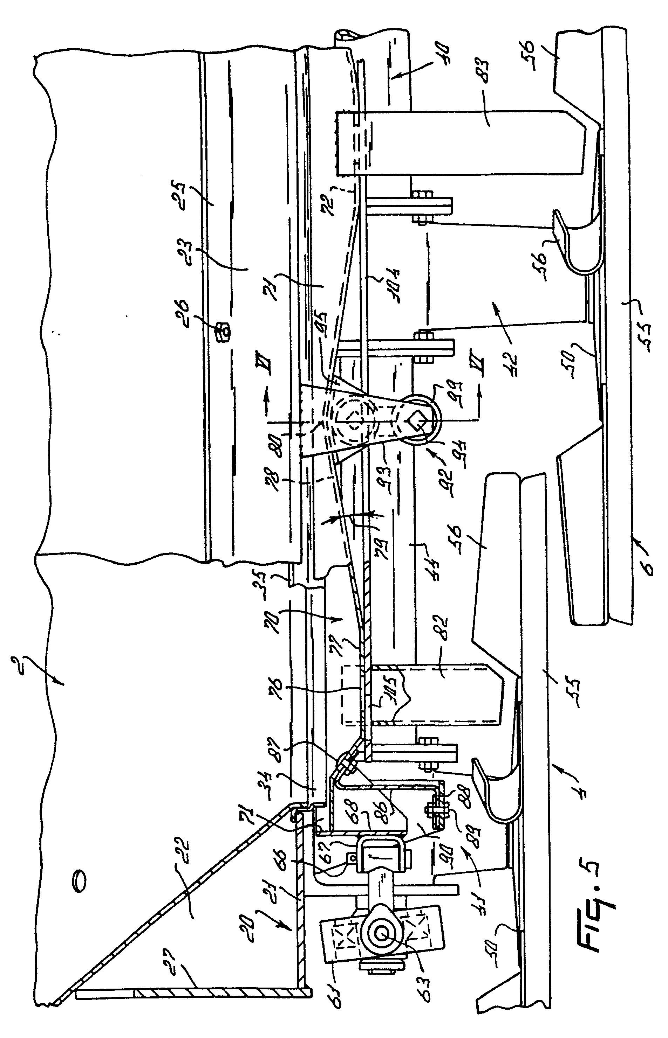

Halfway the height of the frame pillars 10 and 11 a supporting arm 17 is fitted to each of these frame pillars. These supporting arms extend from the frame pillars rearwardly relative to the direction of travel 111. Each of the supporting arms is provided at its end with a coupling plate 18. A supporting beam 20 is bolted to these coupling plates by means of bolts 19. The supporting beam 20 has - as will more specifically be apparent from Figure 4 - a vertical, U-shaped cross-section and extends in the horizontal direction perpendicularly to the normal direction of travel 111. The U-shaped supporting beam 20 has a bottom 21 and a front side 22 and a rear side 23, which sides extend upwardly from the bottom. The front and rear sides, respectively, have folded-over edges 24 and 25 on which the respective front and rear sides of the hopper 2 bear and are bolted thereto by means of bolts 26. The ends of the U-shaped support has side edges 27 which are contiguous to the side walls of the hopper 2 (Figures 1 and 5).

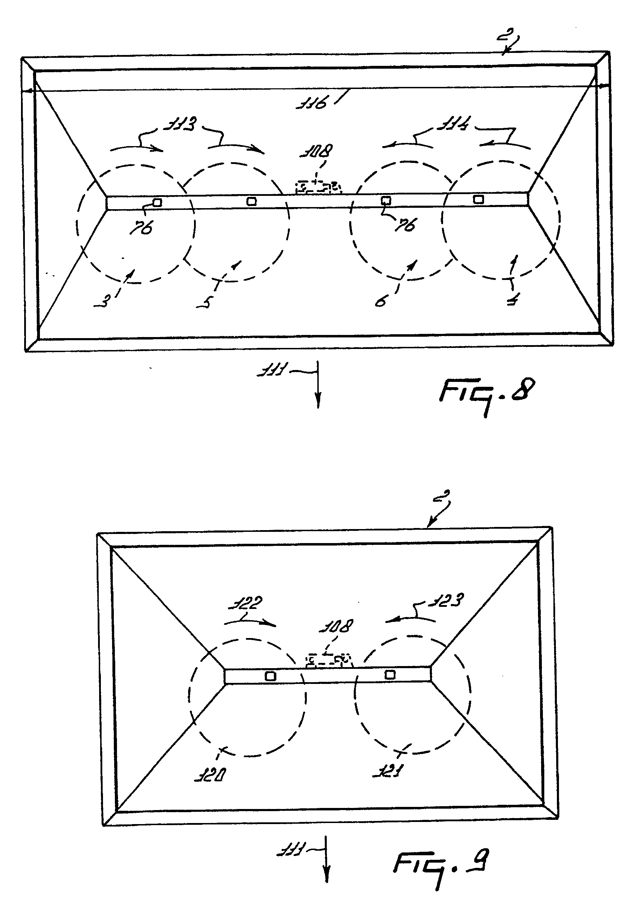

The lower end of the hopper is constituted by a slotted discharge nozzle 31 extending along the entire bottom of the hopper in a direction parallel to the longitudinal direction of the supporting beam 20 and, consequently, perpendicularly to the direction of travel 111. The transverse plane 32 is the centre plane of the hopper 2, which is of a symmetrical structure on either side of the plane 32, so that the plane 32 comprises the centre of gravity of the hopper and constitutes the longitudinal centre plane of the nozzle 31. The nozzle 31 extends through an aperture 33 (Fig. 6) to near the underside of the bottom 21. The discharge nozzle 31 is surrounded by a guide 34 which is in the form of a slot (Figures 4 and 6) and has upper edges 35 bearing on the upper side of the bottom 21. The slotted guide 34 extends downwards to beyond the bottom side of the discharge nozzle 31. The transverse plane 32 also comprises the longitudinal centre plane of the guide 34. Relative to the normal direction of travel 111, the aperture 33 is located nearer to the rear side 23 than to the front side 22. In this situation the height of the rear side 23 is approximately 1/3 the height of the front side 22, so that the edge 24 supports the hopper in a position higher up in the apparatus than the edge 25. Because of this asymmetrical location of the supporting beam 20 relative to the discharge nozzle 31 there is a wide bottom portion 21 near the bottom side of the hopper and preceding the discharge nozzle 31.

A carrier 40 is fitted to this bottom portion 21. Near its ends the carrier 40 includes gear boxes 41 and, interposed therebetween, gear boxes 42. A transmission gear box 43 is arranged halfway the supporting beam 40. The gear boxes 41 and 42 and the gear transmission box 43 are intercoupled by intermediate sleeves 44. In this situation, the gear boxes 41 and 42, the gear transmission box 43 and the intermediate sleeves 44 form a unit in which transmission members are disposed, which are coupled to the spreader members 3, 4, 5 and 6. By means of bolts 45 the supporting beam 40 is bolted to the bottom side of the bottom 21, the bolts 45 being inserted in the upper sides of the gear boxes 41 and 42, as is shown in Figure 4 for the gear box 41. The support 40 extends transversely of the normal direction of travel 111, in parallel with the supporting beam 20.

A drive axle 46 which is bearing-supported in the respective gear boxes and the gear transmission box 43 extends through the entire cylindrical support 40. When the apparatus is in the vertical position, vertical axle shafts 47 are disposed in the gear boxes 41 and 42, perpendicularly to this drive axle 46, as is shown in Figure 4, for one of the gear boxes 41. The drive axle 46 and the axle shafts 47 are intercoupled by gear wheels 48 fitted on the drive axle and gear wheels 49 fitted on the axle shafts 47. Connecting discs 50, which are coupled torsion-resistant to,the shafts 47, are disposed on the bottom side of the axle shafts, which are provided with key-ways. The drive axle 46 includes shaft portions 52 which are provided with key-ways and are bearing-supported in the relevant gear boxes 41 and 42 and are intercoupled by means of hollow shaft portions 53, the hollow shaft portions 53 extending predominantly through the intermediate sleeves 44. The spreader members 3 - 6 each include a thrower disc 55 to which blades 56 are fitted. The thrower discs 55 are bolted to the connecting discs 50 by means of bolts 57 (Figure 4). The drive axle 46 is coupled via transmission members in the transmission gear box 43 to a coupling shaft 54 which projects from the front side of the transmission gear box 43.

The drive axle 46 extends at one end of the support 40 to beyond this support. In this embodiment, seen from the front, the drive axle projects from the gear box 41 at the right-hand side. A drive disc 60 is fastened to this projecting end portion 51 (Figure 3). This drive disc 60 is located at an oblique angle relative to the longitudinal direction of the drive axle 46. A drive ring 61 is bearing-supported, capable of rotation around this drive disc 60 which is rigidly connected to the end portion 51 of the drive axle. This drive ring 61 has a radially projecting drive arm 62 whose end 63 is bearing-supported in a ring 64 of a coupling arm 65. This coupling arm 65 is coupled by means of a hinge pin 66 (Figures 3 and 5) to a bracket 67, which is rigidly connected to a connecting arm 68 of a shaker conveyor 70.

The shaker conveyor 70 has a U-shaped cross-section (Figure 4) with a bottom 72 and vertical edges 71. The shaker conveyor 70 extends along the overall length under the discharge nozzle 31 and the guide 34. The upper sides of the raised edges 71 contain the lower end of the guide 34. Basically, the bottom 72 of the shaker conveyor 70 constitutes the bottom of the hopper. The longitudinal centre plane of the shaker conveyor 70 is also located in the transverse plane 32. The transverse plane 32 is located at a distance 73 from the vertical plane 74, which comprises the centre line of the drive axle and consequently the centre points of the spreader members 3 - 6. The distance 73 is such that, in plan view, the shaker conveyor is located above portions of the spreader members 3 - 6 located behind the plane 74. Then the distance 73 is less than one fourth of the diameter 75 of the spreader members. Those portions of the shaker conveyor located above the spreader members 3, 4, 5 and 6 each have a discharge aperture 76 which in this embodiment is rectangular, the rectangles in this embodiment being square. The discharge apertures 76 are provided in flat bottom portions 77 of the shaker conveyor, the undersides of these bottom portions 77 all being located in one plane. The bottom portions 77 are slightly recessed relative to the further portions of the bottom 70. Those portions of the bottom 72 located between the bottom portions 77 are in the shape of a V, considered perpendicularly to the longitudinal direction of the shaker conveyor (Figure 5), the lengths of these V-shaped portions 78 converging upwardly from the bottom portions 77 and joining each other in a top edge 80. Each of the V-shaped bottom portions 78 is the mirror image relative to the top edge 80, these bottom portions enclosing an angle 79 with the plane in which the undersides of the bottom portions 77 are located. In this embodiment the angle 79 is approximately 10°. This angle may alternatively be chosen differently. The top edge 80 is just below the bottom side 81 of the guides 34.

Guide members 82 and 83 are fitted to the shaker conveyor 70 near the discharge apertures 76. These guide members are in the shape of a trough, each guide member extending downwardly at an oblique angle and in the forward direction from near one of the discharge apertures to one of the four spreader members. When the apparatus is in the upright position the spreader members 3 and 4 are flush with each other. When the apparatus is in this upright position the spreader members 5 and 6 are also flush with each other but at a lower level than the spreader members 3 and 4, as will be apparent more specifically from Figure 1. Because of the lower position of the spreader members 5 and 6, the guide members 83 which are contiguous to these spreader members are longer from the shaker conveyor than the guide members 82 which are contiguous to the spreader members 3 and 4. The guide members 82 and 83 end above the spreader members near the plane 74 (Figure 4). In this situation the spreader members 82 and 83 and above the spreader members at those sides of the centres of the relevant spreader members which are located at the side facing the centre plane 112 of the apparatus, as will be apparent more specifically from Figure 1. The centre plane 112 is constituted by a vertical plane which comprises the longitudinal centre line of the apparatus, and the apparatus is of a predominantly symmetrical construction relative to this plane. The spreader members 3 and 4 in particular are positioned symmetrically relative to the plane 112 in which the spreader members 4 and 6 are located. The spreader members 3 - 6 are all identical to each other, the spreader members 3 and 5 at one side of the plane 112 are fully identical but symmetrical to the fully identical spreader members 4 and 6. The closest-spaced spreader members 5 and 6 are, in plan view, positioned remote from each other, whilst the two spreader members located at one side of the centre plane 112 overlap in plan view (Figures 1 and 8).

The ends of the shaker conveyor are - as is shown in Figure 5 for one end - provided with leaf springs 86 which are bolted to the shaker conveyor bottom by means of bolts 87. The folded-over bottom ends 88 of the vertically extending leaf springs 86 are bolted by means of bolts 89 to supports 90, which are bolted by means of the bolts 45 to the bottom 21 of the support 20 (Figures 4 and 5). In Figure 5 the folded-over bottom end to which the leaf springs 86 are fitted is only shown partially.

Near the top edge 80 of those bottom portions 78 which are arranged in the shape of a V and are remotest from each other, the shaker conveyor 70 is furthermore supported by supports 92, one of which is shown in Figure 5. The support 92 which is shown in greater detail in Figure 6, comprises two strips 93 fitted to the bottom 21 of the support 20.

These strips extend downwardly from the bottom and have their bottom ends intercoupled by means of a coupling rod 94. The cross-section of the rod 94 is out-off-round and is fitted incapable of rotation in holes 91 of the strips 93.

A bracket 95 of a U-shaped cross-section is disposed below the top edge 80 at the bottom side of the shaker conveyor 70. In the downward facing edges of this bracket, non-round coupling pins 96 are fitted. In this embodiment the coupling pins 96 and the coupling rod 94 have a square cross-section. Intermediate rings 97 of a flexible material are rigidly fitted around the coupling rod 94. The pins 95 are surrounded by intermediate rings 98 of a flexible material. Coupling rings 99 and 100, which are inter-connected by means of a coupling arm 101 are provided around the exterior of the intermediate rings 97 and 98.

A dosing slide 104 is disposed below the shaker conveyor 70. This dosing slide 104 extends as one long strip under the bottom 72 of the shaker conveyor and abuts against the underside of the bottom portions 77. The dosing slide 104 has passages 105 which taper towards one end to form a triangular point 106, the passage 105 and also the discharge aperture 76 being, in plan view, of a symmetrical structure relative to the transverse plane 32 (Figure 7). The dosing slide 104 includes a lug 107 which by means of an adjusting member 108 is connected to a lug 109 which is rigidly fastened to the shaker conveyor 70. In this embodiment the adjusting member 108 is a hydraulic member which is couplable to a hydraulic operating mechanism by means of lines 110.

During use, the apparatus is fastened to the lifting device of a tractor or a such like vehicle. To this end the lugs 15 can be coupled to the top rod and the lugs 16 to the lifting arms of the three-point lever lifting device. The coupling shaft 54 is coupled to the power take-off shaft of the tractor via an intermediate shaft.

The material to be spread is carried along in the hopper 2 and during travel of the apparatus in the direction indicated by arrow 111 it is fed from the hopper 2 to the spreader members 3 - 6. During operation these spreader members are caused to rotate and spread the material over a wide strip extending on both sides of the apparatus. Rotation of the spreader members is imparted by the coupling shaft 54 via the transmission means in the transmission gear box 53 and the drive shaft 46 to which the different axle shafts 47 are coupled by means of the gear wheels 48 and 49. The transmission members in the transmission unit constituted by the support 40 are such that the spreader members 3 - 6 all rotate with the same rotational speed, the spreader members 3 and 5 located at one side of the centre plane 112 rotating in one and the same direction, whilst the two spreader members 4 and 6 located at the other side of the symmetry plane 112 also rotate in one and the same direction. In this situation the spreader members 3 and 5 rotate in a direction opposite to the direction in which the spreader members 4 and 6 rotate, the spreader members 3 and 5 rotating in the direction indicated by the arrows 113 and the spreader members 4 and 6 in the direction indicated by the arrows 114 (Figure 8).

The material is fed from the hopper 2 to the spreader members 3 - 6, each spreader member receiving the material from the discharge aperture 76 and the bottom portion 77 located above the relevant spreader member. The material flowing from the discharge apertures 76 is fed to the relevant spreader member via the relevant V-shaped guide member 82 or 83. The guide members 82 and 83 end in such a position over the spreader members and the spreader members are formed such and driven with such a rotational speed that the spreader members 3 and 5 spread the material predominantly at one side of the centre plane 112 and the spreader members 4 and 6 spread the material predominantly to the other side of the plane 112. In this situation the spreader members 3 and 5 spread the material predominantly over the same spread sector, whilst the spreader members 4 and 6 also spread the material over the same spread sector. Thus, during travel of the apparatus, a strip of soil is spread which extends equally far on both sides of the apparatus, the strip spread by the spreader members 3 and 5 overlapping at least partially the strip spread by the spreader members 4 and 6. Since the two spreader members spread the material on both sides of the symmetry plane over the same sector, a uniform distribution of the material over the strip to be spread is achieved. The density of the material spread per unit of surface may decrease towards the facing edges of the strip. In a subsequent run this strip with decreasing spread density is overlapped for a uniform spread of the material over the surface area. Thus, the apparatus is particularly suitable for spreading fertilizer or seeds or a such like granular or pulverulent material over the land.

The quantity of material spread per unit of time is also determined by the size of the discharge aperture 76 released by the passage aperture 105. Thus, the quantity of material fed per unit of time from the hopper to the spreader members can be controlled. For this purpose the dosing slide 105 can be adjusted to a predetermined position relative to the shaker conveyor 70 by means of the adjusting member 108, which is not further shown in this embodiment. The triangular point 106 of the passage aperture 105 provides that when only a small portion of the discharge aperture 76 is left free such a passage aperture is created that the material can still flow appropriately from the hopper, even when small quantities must be spread per unit of time. A proper flow from the hopper through the discharge apertures 76 is ensured in that during operation of the apparatus a reciprocating motion is imparted to the shaker conveyor 70 parallel to its longitudinal direction. The shaker conveyor 70 is coupled via the coupling arm 65 to the drive arm 62 which is connected to the drive disc 60 on the drive axle 46.

During operation the drive shaft 46 is driven for driving spreader members. The drive disc 60 is arranged at such an oblique angle relative to the longitudinal direction of the drive shaft 46 that this disc causes the oblique position of the ring 61 to move around the centre line of the drive shaft 46 in such a way that the drive arm 62, which extends radially from the ring 61, reciprocates in the direction indicated by the arrow 115 (Figure 3). This reciprocating motion of the end 63 of the drive arm 62 is transferred to the shaker conveyor for effecting an identical reciprocating motion 115. The shaker conveyor 70 is only spring-supported in the frame 1 of the apparatus. In this situation the shaker conveyor 70 is connected under spring load to the supporting beam 20 by means of the leaf springs 86 and the resilient intermediate rings 97 and 98 in the supports 92. Because of the reciprocating motion of the shaker conveyor 70 the material will be prevented from clotting in the shaker conveyor or in the guide 34 of the discharge nozzle 31. The bottom portions 78, arranged in a V, of the shaker conveyor are directed from the top edge 80 at a downward angle to the bottom portions 77 in which the discharge apertures 76 are provided. Thus the material is advantageously and uniformly discharged through the discharge apertures 76, partly because of the reciprocating motion of the shaker conveyor. Therefore, the shaker conveyor constitutes at least a part of a dosing apparatus. In this embodiment the shaker conveyor constitutes a dosing apparatus together with the dosing slide. If there is no need for adjusting the passage size of the discharge apertures 76, the shaker conveyor may constitute a dosing apparatus, without the use of a dosing slide. Thus, the hopper and the shaker conveyor can be completely emptied without any material remaining in the hopper. As the shaker conveyor extends along the overall bottom of the hopper, an advantageous discharge of the material from the hopper is obtained. Because all the spreader members are supplied with material by one and the same mechanism, namely the shaker conveyor 70, it can be ensured that the quantities of material fed to each of the spreader members are equal. By means of the shaker conveyor 70 a simple construction is obtained, material being kept in motion over the entire bottom, using one mechanism, for a proper discharge of the material to the spreader members.

Because of the shown construction of the obliquely positioned drive disc 60, the drive of the shaker conveyor can be simple and be coupled advantageously to the spreader member drive. The suspension of the shaker conveyor in the frame 1 is provided in a simple way and using simple means by the leaf springs 86 and the resilient rings 97 and 98. This accomplishes an appropriate support and a proper positionof the shaker conveyor relative to the hopper and to the frame. The movable support of the shaker conveyor in the frame can be achieved without the use of concrete hinge pins.

By providing all the discharge apertures in one shaker conveyor and connecting the spreader members 3 - 5 all to one and the same support 40, an adequate mutual positioning of the discharge aperture relative to the spreader members can be accomplished in a simple way. For this purpose only the shaker conveyor 70 and the support 40 must be mutually adjusted in the proper position relative to each other. The support 40 and the spreader members, at least the connecting discs 50 thereof, can be formed as one unit and, before the hopper 2 is positioned on the supporting beam 20, be bolted to the supporting beam 20 using the bolts 45. Preferably the spreader members 3, 4, 5 and 6 are fitted on the support already before the supporting beam 40 is fastened to the supporting beam 20.

An apparatus according to the invention can be a broad apparatus, the hopper 2 having, for example, a width 116 of 270 cms. In this embodiment the width 116 of the hopper 2 determines the width of the machine perpendicularly to the direction of travel 111. In this embodiment the spreader members have diameters 75 of approximately 60 cms. However, different diameters may alternatively be chosen for the spreader members, preferably between 30 and 80 cms. The length of the discharge nozzle 31, so seen in the lateral direction of the hopper, is in this embodiment substantially the same as the length of the supporting beam 20, which in this embodiment has a length of approximately 175 cms. The width 118 of the discharge nozzle 31 is preferably approximately 5 cms, but for certain purposes may be somewhat narrower or larger, preferably the width 118 is not less than 2.5 cms and not more than 10 cms. The width 116 of the apparatus does preferably not exceed 300 cms.

The structure of the apparatus is particularly simple, so that the apparatus is easy and inexpensive to manufacture. The various components of the apparatus are all easily accessible so that maintenance operations can be effected in a simple way.

Although the embodiment shown in the Figures 1 - 8 is of an apparatus having four spreader members 3 - 6, the construction of the apparatus shown in this embodiment can alternatively be used when the apparatus has only two spreader members, or a different number. Using the shaker conveyor for an appropriate feed of material to two or a plurality of spreader members can basically be employed for any number of spreader members. The construction in which a plurality of spreader members are fastened to the supporting beam 40 can also be used with a number of spreader members other than the four spreader members shown in the Figures 1 - 8. Figure 9 shows in a plan view and schematically a spreader having two spreader members 120 and 121. Fundamentally, the apparatus 9 can be compared with an apparatus shown in the Figures 1 and 8 with a reduced width, the spreader members 3 and 4 having been omitted and the hopper 2 having a narrower width. In principle, the construction of the apparatus of Figure 9 may correspond to the apparatus shown in the Figures 1 - 8. If so desired, the two spreader members 120 can be disposed at equal heights in the apparatus, in correspondence with the height at which the spreader members 3 and 4 are disposed in the apparatus. In this embodiment the two spreader members 120 and 121 rotate in opposite directions relative to each other, as indicated by the arrows 122 and 123, these respective directions of rotation corresponding to the directions of rotation 113 and 114.

The shown construction of the apparatus according to the invention may alternatively be used when the various spreader members shown in the Figures rotate in directions opposite to the directions indicated by the arrows 113, 114 and 122, 123, respectively. To this end, if so desired, the guide means 82 and 83 between the relevant discharge apertures and the relevant spreader members may be positioned differently, such that the material is then fed to the spreader members in the desired location, depending on the direction of rotation of the spreader members and the rotational speed and/or the structure thereof. Then, the apparatus may be constructed such that all the spreader members spread the material over the same sector, such that each spreader member spreads the material substantially over the entire overall width of the strip spread with material.

The invention is not limited to the details described in the foregoing, but also applies to all that is shown in the drawings and is obvious therefrom.

## Claims

1. An apparatus for spreading spreadable material, more specifically granular and/or pulverulent material such as fertilizer or seeds, having a frame (1) to which a hopper (2) and at least one spreader member (3 - 5) which is movable around an upwardly extending rotational axis are provided, to which the material can be fed during operation from the hopper, the lower end of the hopper having a slotted discharge nozzle (31) below which a reciprocable dosing apparatus including a shaker member (70), is disposed constituting the bottom of the hopper, characterised in that the bottom (77, 78) of the shaker member (70) is provided with discharge apertures (76) and that a dosing slide (104) is provided abutting the bottom of the shaker member and having passages (105) for determining the size of the discharge apertures through which material can be fed from the hopper to the spreading member.

2. An apparatus as claimed in claim 1, characterized in that the dosing apparatus (70) is fastened to the apparatus capable of movement by means of suspension members (86 and 92).

3. An apparatus as claimed in claim 1 or 2, characterized in that the frame (1) includes a supporting beam (20) extending transversely of the normal direction of travel of the apparatus, to which the lower end of the hopper (2) and a spreader member (3 - 5) are fitted, as well as the dosing apparatus (70) via which material can be fed from the hopper to the spreader member during operation of the apparatus.

4. An apparatus as claimed in claim 3, characterized in that the supporting beam has a U-shaped cross-section, the two legs (22 and 23) of this U-shape extending upwardly and being located on both sides of the lower end of the hopper and supporting it, whereby the bottom (21) of the U-shaped support is provided with an elongate aperture (33) into which the slotted discharge nozzle (31) of the hopper extends.

5. An apparatus as claimed in any one of the preceding claims, characterized in that the slotted discharge nozzle (31) extends in the lateral direction of the apparatus, whereby the shaker member (70) is a U-shaped shaker member whose upright edges (71) extend to near the slotted discharge aperture (31) of the hopper such, that the shaker member constitutes a longitudinal hopper bottom.

6. An apparatus as claimed in any one of the preceding claims, characterized in that the shaker member (70) extends over the length of the underside of the hopper (2) in a direction transversely of the normal direction of travel (111) of the apparatus, whereby the bottom end of the shaker member comprises flat bottom portions (77) provided with the discharge apertures, upwardly converging V-shaped bottom portions (78) which extend to near the discharge nozzle by means of their top edge being located between these flat bottom portions.

7. An apparatus as claimed in any one of the preceding claims, characterized in that the dosing apparatus (70) is only connected to the frame of the apparatus by means of flexible members (86, 97, 98).

8. An apparatus as claimed in any one of the preceding claims, characterized in that the apparatus includes two or more spreader elements (3 - 6) and for each of the spreading members the shaker member (70) is provided with at least one discharge aperture.

9. An apparatus as claimed in claim 8, characterized in that spreading members are fastened to a support (40) which is rigidly connected to the supporting beam (20) of the frame, the support (40) includes gear boxes (41, 42) which are coupled to each other by means of intermediate sleeves (44), transmission members being disposed in the gear box and in the intermediate sleeves for driving and mutually coupling the spreader members, whereby the transmission members are coupled to the dosing apparatus.

10. An apparatus as claimed in any one of the preceding claims, characterized in that in plan view the dosing apparatus extends over the spreader members and is provided above the relevant spreader members with a discharge aperture (76), a guide member (82, 83) being disposed between the discharge aperture and the spreader member.

11. An apparatus as claimed in any one of the preceding claims, characterized in that the supporting beam (20) is fastened to the rearwardly extending ends of supporting arms (17) which are fastened to frame beams (10, 11, 12) disposed at the front side of the apparatus, whereby near the front end of the apparatus the frame includes coupling members by means of which the apparatus is couplable to the lifting device of a tractor or a such like vehicle.

12. An apparatus as claimed in any one of the preceding claims, characterized in that the support (40) includes a coupling shaft (54) which is couplable to the power take-off shaft of a tractor or a such like vehicle by means of an intermediate shaft.

13. An apparatus as claimed in any one of the preceding claims, characterized in that a spreader member is disposed on both sides of a vertical centre plane comprising the longitudinal centre line of the apparatus, the spreader members being located symmetrically relative to this centre plane and being rotatable in mutually opposite directions.

14. An apparatus as claimed in any one of the preceding claims, characterized in that two spreader members which, in a plan view, overlap each other at least partly are disposed on both sides of the apparatus.

15. An apparatus as claimed in any one of the preceding claims, characterized in that two spreader members which during operation are driven so as to rotate in the same directions, are disposed on both sides of the centre plane of the apparatus.

## Revendications

1. Appareil pour l'épandage de matière épandable, plus spécifiquement de matière granulaire et/ou pulvérulente telle qu'engrais ou semences, ayant un chassis (1) sur lequel sont prévus une trémie (2) et au moins un organe épandeur (3 - 5) mobile autour d'un axe de rotation s'étendant vers le haut, auquel la matière peut être débitée au cours du travail depuis la trémie, l'extrémité inférieure de la trémie ayant une goulotte de déversement fendue (31) sous laquelle est disposé un appareil doseur à mouvement alternatif comprenant un organe secoueur (70), ce doseur constituant le fond de la trémie,
caractérisé en ce que le fond (77, 78) de l'organe secoueur (70) est muni d'ouvertures de déversement (76) et en ce qu'un tiroir doseur (104) est prévu en s'appliquant contre le fond de l'organe secoueur et en ayant des passages (105) pour déterminer la taille des ouvertures de déversement à travers lesquelles de la matière peut être débitée depuis la trémie vers l'organe épandeur.

2. Appareil selon la revendication 1, caractérisé en ce que le dispositif doseur (70) est attaché à l'appareil en étant capable de mouvement au moyen d'organes de suspension (86 et 92).

3. Appareil selon la revendication 1 ou 2, caractérisé en ce que le chassis (1) comporte une poutre porteuse (20) s'étendant transversalement au sens normal de marche de l'appareil, sur laquelle sont montés l'extrémité inférieure de la trémie (2) et un organe épandeur (3 - 5), ainsi que le dispositif doseur (70) à travers lequel la matière peut être débitée depuis la trémie vers l'organe épandeur pendant le fonctionnement de l'appareil.

4. Appareil selon la revendication 3, caractérisé en ce que la poutre porteuse a une section en U dont les deux ailes (22, 23) s'étendent vers le haut et sont situées de part et d'autre de l'extrémité inférieure de la trémie en soutenant celle-ci, tandis que le fond (21) du support en U est pourvu d'une ouverture allongée (33) dans laquelle s'étend la goulotte de déversement fendue (31) de la trémie.

5. Appareil selon l'une quelconque des revendications précédentes, caractérisé en ce que la goulotte de déversement fendue (31) s'étend dans le sens latéral de l'appareil, tandis que l'organe secoueur (70) est un organe secoueur en forme de U dont les bords (71) dirigés vers le haut s'étendent jusqu'auprès de l'ouverture de déversement fendue (31) de la trémie, de telle manière que l'organe secoueur constitue un fond longitudinal de la trémie.

6. Appareil selon l'une quelconque des revendications précédentes, caractérisé en ce que l'organe secoueur (70) s'étend sur la longueur de la face inférieure de la trémie (2) dans un sens transversal au sens normal de marche (111) de l'appareil, tandis que l'extrémité du fond de l'organe secoueur comprend des portions de fond plates (77) munies des ouvertures de déversement, des portions de fond (78) en forme de V convergeant vers le haut et s'étendant jusqu'auprès de la goulotte de déversement par leur bord supérieur étant situées entre ces portions de fond plates.

7. Appareil selon l'une quelconque des revendications précédentes, caractérisé en ce que le dispositif doseur (70) est relié au chassis de l'appareil, uniquement au moyen d'organes flexibles (86, 97, 98).

8. Appareil selon l'une quelconque des revendications précédentes, caractérisé en ce qu'il comprend deux - ou plus de deux - éléments épandeurs (3 - 6) et que, pour chacun des organes épandeurs, l'organe secoueur (70) est muni d'au moins une ouverture de déversement.

9. Appareil selon la revendication 8, caractérisé en ce que des organes épandeurs sont attachés à un support (40) qui est relié rigidement à la poutre porteuse (20) du chassis, le support (40) comprenant des boîtes d'engrenages (41,42) qui sont couplées l'une à l'autre au moyen de manchons intermédiaires (44), des organes de transmission étant disposés dans la boîte d'engrenages et dans les manchons intermédiaires pour entraîner et pour coupler entre eux les organes épandeurs, les organes de transmission étant couplés avec le dispositif doseur.

10. Appareil selon l'une quelconque des revendications précédentes, caractérisé en ce que le dispositif doseur s'étend, quand il est vu en plan, au dessus des organes épandeurs et est muni, au dessus des organes épandeurs respectifs, d'une ouverture de déversement (76), un organe de guidage (82, 83) étant disposé entre l'ouverture de déversement et l'organe épandeur.

11. Appareil selon l'une quelconque des revendications précédentes, caractérisé en ce que la poutre porteuse (20) est attachée aux extrémités, s'étendant vers l'arrière, de bras de support (17) attachés à des poutres (10, 11, 12) du chassis disposées sur le côté antérieur de l'appareil, tandis que le chassis comporte, près de l'extrémité antérieure de l'appareil, des organes de couplage au moyen desquels l'appareil peut être attelé au dispositif de levage d'un tracteur ou autre véhicule analogue.

12. Appareil selon l'une quelconque des revendications précédentes, caractérisé en ce que le support (40) comporte un arbre d'accouplement (54) pouvant être relié à l'arbre de prise de force d'un tracteur ou autre véhicule analogue au moyen d'un arbre intermédiaire.

13. Appareil selon l'une quelconque des revendications précédentes, caractérisé en ce qu'un organe épandeur est disposé de part et d'autre d'un plan médian vertical comprenant l'axe longitudinal de l'appareil, les organes épandeurs étant disposés symétriquement par rapport à ce plan médian et pouvant être entraînés en rotation dans des sens mutuellement opposés.

14. Appareil selon l'une quelconque des revendications précédentes, caractérisé en ce que deux organes épandeurs qui se chevauchent l'un l'autre, au moins partiellement, en étant vus en plan, sont disposés sur les deux côtés de l'appareil.

15. Appareil selon l'une quelconque des revendications précédentes, caractérisé en ce que deux organes épandeurs qui sont entraînés, au cours du travail, de manière à tourner dans le même sens, sont disposés de part et d'autre du plan médian de l'appareil.

**Ansprüche**

1. Gerät zum Streuen von streubarem Gut, insbesondere körnigem und/oder pulverförmigem Gut wie Kunstdünger oder Saatgut, mit einem Rahmen (1), der mit einem Vorratsbehälter (2) und mindestens einem Streuglied (3-5) versehen ist, das um eine aufwärts gerichtete Achse drehbar ist und dem das Gut während des Betriebes aus dem Vorratsbehälter zuführbar ist, dessen unteres Ende einen geschlitzten Auslaßstutzen (31) aufweist, unter dem ein hin und her bewegbarer Dosierer mit einem Rüttelglied (70) angeordnet ist, der den Boden des Vorratsbehälters bildet, dadurch gekennzeichnet, daß der Boden (77, 78) des Rüttelgliedes (70) Auslaßöffnungen (76) aufweist, und daß ein Dosierschieber (104) vorgesehen ist, der an dem Boden des Rüttelgliedes anliegt und Durchgangsöffnungen (105) zur Bestimmung der Öffnungsweite der Auslaßöffnungen aufweist, durch die hindurch das Gut aus dem Vorratsbehälter dem Streuglied zuführbar ist.

2. Gerät nach Anspruch 1,
dadurch gekennzeichnet, daß der Dosierer (70) an dem Gerät mittels Aufhängeteilen (86 und 92) bewegbar angeordnet ist.

3. Gerät nach Anspruch 1 oder 2,
dadurch gekennzeichnet, daß der Rahmen (1) einen quer zur normalen Bewegungsrichtung des Gerätes liegenden Tragbalken (20) aufweist, an welchem das untere Ende des Vorratsbehälters und ein Streuglied (3-5) sowie der Dosierer (70) angebracht sind, über den während des Betriebs Streugut aus dem Vorratsbehälter dem Streuglied zuführbar ist.

4. Gerät nach Anspruch 3,
dadurch gekennzeichnet, daß der Tragbalken U-förmigen Querschnitt hat, daß die beiden U-Schenkel (22 und 23) aufwärts gerichtet und beiderseits des unteren, von ihnen abgestützten Endes des Vorratsbehälters angeordnet sind, und daß der Boden (21) des U-Trägers eine langgestreckte Öffnung (33) aufweist, in die der geschlitzte Auslaßstutzen (31) des Vorratsbehälters hineinragt.

5. Gerät nach einem der vorhergehenden Ansprüche,
dadurch gekennzeichnet, daß sich der geschlitzte Auslaßstutzen (31) in Querrichtung des Gerätes erstreckt, und daß das Rüttelglied (70) ein U-förmiges Rüttelglied ist, dessen aufrechte Seiten (71) bis nahe an die schlitzförmige Auslaßöffnung (31) des Vorratsbehälters reicht, derart, daß das Rüttelglied einen Längsboden des Vorratsbehälters bildet.

6. Gerät nach einem der vorhergehenden Ansprüche,
dadurch gekennzeichnet, daß sich das Rüttelglied (70) über die Länge der Unterseite des Vorratsbehälters (2) quer zur normalen Bewegungsrichtung (111) des Gerätes erstreckt, und daß das bodenseitige Ende des Rüttelgliedesflache, die Auslaßöffnungen aufweisende Bodenabschnitte (77) und aufwärts konvergierende V-förmige Bodenabschnitte (78) aufweist, welche mit ihrer zwischen den flachen Bodenabschnitten liegenden Oberkante bis nahe an den Auslaßstutzen reichen.

7. Gerät nach einem der vorhergehenden Ansprüche,
dadurch gekennzeichnet, daß der Dosierer (70) nur mit dem Geräterahmen mittels flexibler Glieder (86, 97, 98) verbunden ist.

8. Gerät nach einem der vorhergehenden Ansprüche,
dadurch gekennzeichnet, daß das Gerät zwei oder mehr Streuglieder (3-6) aufweist, und daß das Rüttelglied (70) für jedes der Streuglieder mit mindestens einer Auslaßöffnung versehen ist.

9. Gerät nach Anspruch 8,
dadurch gekennzeichnet, daß Streuglieder an einem Träger (40) angebracht sind, der starr mit dem Tragbalken (20) des Rahmens verbunden ist, daß der Träger (40) Getriebegehäuse (41, 42) aufweist, die mittels Zwischen-Rohrstücken (44) verbunden sind, und daß in den Getriebegehäusen und in den Zwischen-Rohrstücken Getriebeglieder für den Antrieb und die gegenseitige Kopplung der Streuglieder angeordnet sind, wobei die Getriebeglieder mit dem Dosierer gekoppelt sind.

10. Gerät nach einem der vorhergehenden Ansprüche,
dadurch gekennzeichnet, daß der Dosierer in Draufsicht über den Streugliedern liegt und oberhalb des jeweiligen Streugliedes eine Auslaßöffnung (76) aufweist, und daß zwischen der Auslaßöffnung und dem Streuglied ein Führungsglied (82, 83) angeordnet ist.

11. Gerät nach einem der vorhergehenden Ansprüche,
dadurch gekennzeichnet, daß der Tragbalken (20) an den nach hinten gerichteten Enden von Tragarmen (17) befestigt ist, welche an frontseitigen Rahmenträgern (10, 11, 12) befestigt sind, und daß der Rahmen nahe dem vorderen Ende des Gerätes Anschlußglieder aufweist, mit denen das Gerät an die Hebevorrichtung eines Schleppers oder eines ähnlichen Fahrzeuges anzuschließen ist.

12. Gerät nach einem der vorhergehenden Ansprüche,
dadurch gekennzeichnet, daß der Träger (40) eine Anschlußwelle (54) enthält, die mit der Zapfwelle eines Schleppers oder eines ähnlichen Fahrzeuges mittels einer Zwischenwelle kuppelbar ist.

13. Gerät nach einem der vorhergehenden Ansprüche,
dadurch gekennzeichnet, daß je ein Streuglied beiderseits einer vertikalen, die Längsmittellinie des Gerätes enthaltenden Mittelebene angeordnet ist, und daß die Streuglieder symmetrisch in bezug auf diese Mittelebene angeordnet und gegensinnig drehbar sind.

14. Gerät nach einem der vorhergehenden Ansprüche,
dadurch gekennzeichnet, daß an beiden Seiten des Gerätes zwei Streuglieder angeordnet sind, die in Draufsicht einander mindestens teilweise überlappen.

15. Gerät nach einem der vorhergehenden Ansprüche,
dadurch gekennzeichnet, daß beiderseits der Mittelebene des Gerätes zwei im Betrieb gleichsinnig angetriebene Streuglieder angeordnet sind.

Fig. 1

Fig.2

Fig.3

FIG.4

FIG.6

FIG.7

FIG.5

EP 0 196 728 B1

FIG.8

FIG.9